# EUROPÄISCHE PATENTSCHRIFT

(11) **EP 2 823 106 B1**
(45) Veröffentlichungstag und Bekanntmachung des Hinweises auf die Patenterteilung: **28.12.2016**
(21) Anmeldenummer: 13715614.7
(22) Anmeldetag: 04.03.2013
(51) Int. Cl.: E02F 3/26, E02F 9/26, G06T 13/00, B66C 17/00

(54) **SYSTEM UND VERFAHREN ZUM BETRIEB EINER HALDE**
SYSTEM AND METHOD FOR OPERATING A STOCKPILE
SYSTÈME ET PROCÉDÉ POUR L'EXPLOITATION D'UN TERRIL

(30) Priorität: 09.03.2012 DE 102012004569
(43) Veröffentlichungstag der Anmeldung: 14.01.2015
(73) Patentinhaber: Hauk & Sasko Ingenieurgesellschaft mbH, 70567 Stuttgart (DE)
(72) Erfinder: BAAR, Oliver, 73269 Hochdorf (DE); WELSCH, Thomas, 72070 Tübingen (DE); KERN, Hubert, 72649 Wolfschlugen (DE)
(74) Vertreter: Isfort, Olaf
(86) Internationale Anmeldenummer: PCT/EP2013/054247
(87) Internationale Veröffentlichungsnummer: WO 2013/131843

(56) Entgegenhaltungen:
- EP-A2- 0 451 520
- CN-A- 102 184 329
- DE-A1- 19 737 858
- JP-A- S5 852 119
- Dem Solutions: "EDEM PDF Brochure", , 21. April 2008 (2008-04-21), Seiten 1-4, XP055030953, Gefunden im Internet: URL:ftp.medeso.se/htdocs/software/edem.htm l [gefunden am 2012-06-25]

## Beschreibung

Die Erfindung betrifft ein System zum Betrieb einer Halde, mit einer Fördereinrichtung zum Auf- und/oder Abhalden von Massengut, einer mit der Fördereinrichtung verbundenen Leittechnikeinrichtung zur automatischen Steuerung der Fördereinrichtung, und einem mit der Leittechnikeinrichtung verbundenen Steuerrechner, der Auf- und/oder Abhaldungsvorgänge auf Basis eines dreidimensionalen Haldenmodells steuert.

Moderne und flexible Massengutumschlaganlagen verlangen bestands- und durchlaufzeitoptimierte Systeme zum Betrieb von Halden. Von besonderer Bedeutung ist dabei die Automation der Auf- und Abhaldungsvorgänge unter Verwendung der üblichen Fördereinrichtungen, wie z.B. Schaufelradgeräten oder Portalkratzern. Anzustreben sind Lösungen, die eine kostengünstige und einfache Handhabung im Betrieb gewährleisten.

Aus der DE 197 37 858 A1 ist ein System bekannt, bei dem eine Halde automatisiert mittels eines Schaufelradgerätes auf- und abgehaldet wird. Das Schaufelradgerät ist mit einer Leittechnikeinrichtung verbunden, die mittels eines Steuerrechners angesteuert wird. Das Schaufelradgerät fährt auf entsprechende Befehle des Steuerrechners hin automatisch an eine Ab- oder Aufhaldungsposition und baut dort das Massengut automatisch ab bzw. haldet es automatisch auf. Dabei erfolgt die Ansteuerung des Schaufelradgerätes auf Basis eines dreidimensionalen Haldenmodells, auf das der Steuerrechner zugreift. Das dreidimensionale Haldenmodell wird mittels des Steuerrechners in Abhängigkeit von Messwerten einer Messeinrichtung errechnet. Die Mess-einrichtung ist an dem Schaufelradgerät angebracht und tastet die Haldenoberfläche kontinuierlich während der Auf- bzw. Abhaldungsvorgänge ab. Aus dem Abtastwert errechnet und aktualisiert der Steuerrechner laufend das dreidimensionale Haldenmodell. Im Zuge einer Messfahrt wird das Schaufelradgerät mit der daran angeordneten Messeinrichtung derart entlang der Halde bewegt, dass die Messeinrichtung die gesamte Halde überstreicht. Alternativ oder parallel dazu wird das dreidimensionale Haldenmodell aus Messdaten errechnet, die während des normalen Betriebs des Schaufelradgerätes ermittelt werden.

Ein Nachteil des vorbekannten Systems ist, dass dieses zur Erzeugung und Aktualisierung des Haldenmodells auf eine Messeinrichtung angewiesen ist. Geeignete Messeinrichtungen sind z.B. zwei- oder dreidimensional arbeitende Laserscanner. Derartige Systeme sind sehr teuer und eignen sich daher für kleinere Haldensysteme nicht oder nur bedingt. Ein weiterer Nachteil ist, dass optische Messsysteme zur Erfassung der Haldenoberfläche bei staubenden Massengütern nicht oder nur bedingt einsetzbar sind.

Vor diesem Hintergrund ist es Aufgabe der Erfindung, ein verbessertes System zum Betrieb einer Halde bereitzustellen. Es soll ein System geschaffen werden, das insbesondere ohne eine Messeinrichtung zur Erzeugung und zur Aktualisierung eines dreidimensionalen Haldenmodells auskommt.

Diese Aufgabe löst die Erfindung ausgehend von einem System der eingangs angegebenen Art dadurch, dass der Steuerrechner zur Durchführung einer deterministischen, dynamischen Physiksimulation eingerichtet ist, welche die Massengutbewegung beim Auf- und/oder Abhalden nachbildet und so das Haldenmodell entsprechend der auf- bzw. abgehaldeten Massengutmenge aktualisiert.

Die Erfindung basiert darauf, eine möglichst realitätsnahe Simulation der physikalischen Vorgänge beim Auf- und/oder Abhalden durchzuführen, um so das Haldenmodell laufend aktuell zu halten. Die realitätsnahe Simulation macht eine Messvorrichtung zur Vermessung der Haldengeometrie überflüssig. Dementsprechend kann auf eine teure und anfällige Messvorrichtung gemäß der Erfindung verzichtet werden.

Die Simulation ist bei dem erfindungsgemäßen System in der Weise an das verwendete dreidimensionale Haldenmodell anzupassen, dass einerseits ein hinreichender Abstraktionsgrad vorliegt, um überhaupt eine Simulation der physikalischen Vorgänge beim Auf- und Abhalden zu ermöglichen, da die vollständige theoretische oder formelmäßige Behandlung der dynamischen Vorgänge beim Auf- und Abhalden zu kompliziert wäre. Andererseits müssen das Haldenmodell und die darauf abgestimmte Simulation hinreichend genau und realitätsnah sein, um einen zuverlässigen und effizienten Betrieb möglichst ohne Korrektureingriffe zu gewährleisten. Erfindungsgemäß erfolgt eine deterministische Physiksimulation. Darunter wird, wie oben bereits erwähnt, eine Nachbildung der beim Auf- und Abhalden ablaufenden physikalischen Vorgänge verstanden. Zufällige (stochastische) Einflüsse werden nicht berücksichtigt. Außerdem wird gemäß der Erfindung eine dynamische Simulation eingesetzt. Dynamisch ist die Simulation, weil die Veränderung der Geometrie der Halde im Haldenmodell über die Zeit beim Auf- bzw. Abhalden nachgebildet wird. Letztlich werden durch die erfindungsgemäße Simulation die realen physikalischen Vorgänge beim Auf- bzw. Abhalden in vier Dimensionen abgebildet, nämlich in den drei Raumdimensionen und der Zeitdimension.

Ein Vorteil des erfindungsgemäßen Systems ist, dass der Steuerrechner mit nur wenigen Daten der Leittechnikeinrichtung auskommt, um die automatisierte Steuerung des Auf- und Abhaldens durchzuführen. Somit sind bei Einsatz des erfindungsgemäßen Systems in einem bestehenden Haldensystem nur wenige Anpassungen im Bereich der Leittechnik erforderlich.

Bei einer bevorzugten Ausgestaltung des erfindungsgemäßen Systems basiert das Haldenmodell auf einem Datenmodell, welches den Lagerplatz der Halde in ein horizontales zweidimensionales Raster mit vorgebbarer Auflösung unterteilt, wobei jedem Feld des Rasters eine vertikale Massengutsäule zugeordnet ist, und wobei jede Massengutsäule in vertikaler Richtung in Schichten variabler Schichtdicker unterteilt ist. Diese Modellierung der realen Halde hat sich in der Praxis als geeignet erwiesen, um eine hinreichende Realitätsnähe zu erhalten und um alle im Betrieb der Halde erforderlichen Daten verfügbar zu haben. Das gemäß der Erfindung eingesetzte Datenmodell stellt zwar eine Vereinfachung der Realität dar. Diese Vereinfachung beeinträchtigt naturgemäß auch die Genauigkeit der Ergebnisse der Physiksimulation. Es ist allerdings zu berücksichtigen, dass aufgrund der zur Verfügung stehenden Rechenkapazität und aufgrund der Anforderung, die Physiksimulation "in Echtzeit" auszuführen, um das dreidimensionale Haldenmodell während der Auf- bzw. Abhaldungsvorgänge laufend aktuell zu halten, das Datenmodell möglichst einfach sein sollte. Das erfindungsgemäß eingesetzte Datenmodell stellt insofern einen Kompromiss zwischen Einfachheit und Effizienz einerseits und hinreichender Realitätsnähe andererseits dar. Die Realitätsnähe wird umso besser, je höher die Auflösung des Rasters gewählt wird. Eine geeignete Auflösung kann einfach durch Validierung des Modells anhand der realen Haldengeometrie gefunden werden.

Bei einer weiteren bevorzugten Ausgestaltung des erfindungsgemäßen Systems werden durch das Datenmodell jeder Schicht innerhalb jeder Massengutsäule ein oder mehrere das Massengut charakterisierende Massengutparameter zugeordnet. Massenguthalden enthalten in der Regel Massengüter, die sich durch Qualitätsparameter unterscheiden. Die entsprechenden Parameter können jeder Schicht innerhalb jeder Massengutsäule bei dem erfindungsgemäßen Datenmodell zugeordnet werden. Weitere Massengutparameter, die in dem Datenmodell erfasst sein können, sind z.B. logistische Parameter, so dass das auf einer Halde befindliche Massengut z.B. einer bestimmten Lieferung zugeordnet werden kann. Das erfindungsgemäße Datenmodell ist besonders vorteilhaft, da es ermöglicht, die aktuelle Zusammensetzung der Halde und die Verteilung der Massengutqualitäten während des Betriebs zu berücksichtigen. Dies ist für die laufende Verwaltung der Halde von großer Wichtigkeit. Aus dem dreidimensionalen Haldenmodell kann die aktuell eingelagerte Gesamtmenge und deren räumliche Verteilung innerhalb der Halde jederzeit ermittelt werden. Das erfindungsgemäß verwendete Haldenmodell erlaubt es, jederzeit die aktuellen Haldeninhalte zu betrachten. Auf Basis dieser Informationen ist es möglich, Planungsentscheidungen zur weiteren Nutzung der Halde zu treffen. Da für jedes Volumenelement der Halde detaillierte Informationen zur Qualität des eingelagerten Massenguts vorliegen, kann die Qualität der Halde insgesamt oder aber auch nur von deren Teilbereichen ermittelt werden. Daraus können Mischungsqualitäten bestimmt und zur Qualitätssicherung herangezogen werden. So ist es z.B. möglich, dass der Steuerrechner des erfindungsgemäßen Systems Abhaldungsvorgänge automatisch auf Basis einer benutzerseitigen Vorgabe von bestimmten Massengutparametern steuert oder der Steuerrechner auf Basis von Benutzervorgaben bei der Abhaldung eine gewünschte Mischung von Massengutqualitäten automatisch einstellt. Jederzeit kann eine Analyse der in der Halde befindlichen Mischungsqualitäten durchgeführt werden, um z.B. kritische Teilbereiche innerhalb der Halde aufzufinden. Auf Basis der Kenntnis über die aktuelle Verteilung der Massengutqualitäten innerhalb der Halde können zukünftige Aufhaldungsvorgänge so geplant werden, dass die Mengen und Qualitäten optimal in die Halde eingepasst werden.

Da die Algorithmen der erfindungsgemäß eingesetzten Physiksimulation streng an den physikalischen Gegebenheiten bei den Auf- und Abhaldungsvorgängen orientiert sind, ist es möglich, auf Basis des dreidimensionalen Haldenmodells durch die Physiksimulation Prognosen durchzuführen. Dies können z.B. Abhaldungsprognosen sein, die Aufschluss darüber geben, welche Mischungsqualitäten des Massengutes in nächster Zeit bei der Abhaldung zu erwarten sind. Dies können auch Bestandsprognosen sein, die Aufschluss darüber geben, welche Gesamtqualität in der Halde zu erwarten ist, falls zukünftig bestimmte Massengutlieferungen zusätzlich aufgehaldet werden. Dies ermöglicht insgesamt eine hohe Effizienz im Betrieb der Halde, und auch der zugehörigen Anlagen (z.B. bei einer Kohlehalde eines Kraftwerks).

Ein weiterer Vorteil ist, dass die dem erfindungsgemäßen dreidimensionalen Haldenmodell zugrundeliegenden Datenstrukturen archiviert werden können. Somit ist es jederzeit möglich, die historische Zusammensetzung der Halde zu betrachten, um z.B. nachträglich Ursachenforschung bei Störungen zu betreiben.

Bei einer bevorzugten Ausgestaltung des erfindungsgemäßen Systems wird beim Aufhalden das Haldenmodell aktualisiert, indem einer oder mehreren Massengutsäulen auf Basis der Physiksimulation eine oder mehrere Schichten hinzugefügt werden. Dabei kann die Physiksimulation vorteilhaft einen Aufhaldungsvorgang nachbilden, indem von einem Abwurfpunkt ausgehend ein aufgehaldetes Massengutvolumen kegelförmig auf der gemäß dem Haldenmodell bestehenden Haldenoberfläche verteilt wird und den Massengutsäulen eine oder mehrere Schichten entsprechend der Kegelgeometrie hinzugefügt werden. Auf dieser Basis erfolgt die Aktualisierung des Haldenmodells zweckmäßigerweise mit der Taktung der Leittechnikeinrichtung, um die jeweils aktuellen Veränderungen der Halde im Modell nachzubilden. Im ersten Schritt wird die aktuelle Aufhaldungsposition (Abwurfpunkt) ermittelt. Die Aufhaldungsposition kann z.B. aus den über die Leittechnikeinrichtung verfügbaren Sensorikdaten und im Steuerrechner des Systems hinterlegten Gerätedaten der Fördereinrichtung (z.B. Länge des Abwurfarms) ermittelt werden. Dabei wird gegebenenfalls noch eine für die Geometrie und Arbeitsweise der Fördereinrichtung und die Art und Beschaffenheit des Massengutes gültige Abwurfparabel berücksichtigt. Aus dem ebenfalls über die Leittechnik abfragbaren aktuellen Massengutdurchsatz kann die aktuelle Aufhaldungsmenge ermittelt werden. Diese Menge wird dann in ein Volumen umgerechnet. Hierbei wird die Dichte des Massenguts als wichtiger Massengutparameter berücksichtigt. Das so ermittelte Massengutvolumen wird vom Abwurfpunkt ausgehend dem Haldenmodell hinzugefügt, indem das Volumen kegelförmig auf der gemäß dem Haldenmodell bestehenden Haldenoberfläche verteilt wird. Bei der Ermittlung der Kegelgeometrie bezieht das System den Schüttwinkel als weiteren wichtigen Massengutparameter, der der aktuell aufgehaldeten Massengutmenge zugeordnet ist, ein. Ist diese Information nicht vorhanden, kann auf im Steuerrechner hinterlegte Standardwerte zurückgegriffen werden.

Anstelle des zuvor beschriebenen Kegelmodells kann für die Physiksimulation gemäß der Erfindung eine sog. Diskrete Elemente Methode verwendet werden. Mit "Discrete Element Method" (DEM) wird eine numerische Berechnungsmethode bezeichnet, mit der die Bewegung einer großen Zahl von Teilchen berechnet werden kann. Die Grundannahme des Simulationsverfahrens beruht darauf, dass das zu simulierende Massengut sich aus einzelnen, abgeschlossenen Elementen (Teilchen, Partikeln) zusammensetzt, was der Realität bei den meisten Schüttgütern sehr nahe kommt. Gemäß der Erfindung müssen allerdings die simulierten Teilchen nicht zwingend hinsichtlich der Partikelgröße und damit der Anzahl der zu simulierenden Elemente mit den realen Massengutpartikeln identisch sein. Die simulierten Elemente können unterschiedliche Formen und Eigenschaften haben. Hier ist ein Modell des Massengutes zu finden, das eine hinreichende Realitätsnähe der Simulationsergebnisse liefert. Bei der DEM-Simulation werden alle Teilchen in einer bestimmten Startgeometrie positioniert und ggf. mit einer Anfangsgeschwindigkeit versehen. Aus diesen Anfangsdaten und den physikalischen Gesetzen, die für die Teilchen relevant sind, werden die Kräfte ausgerechnet, die auf jedes Teilchen wirken. Kräfte, die hier in Frage kommen, sind zum Beispiel Reibungskräfte, wenn zwei Teilchen einander streifen, rückstoßende Kräfte, wenn zwei Teilchen aufeinander treffen (und dabei ggf. leicht reversibel deformiert werden), und Gravitationskräfte, also die Schwerkraftwirkung auf die Teilchen, wenn diese sich beim Aufhalden oder Abhalden auf der Haldenoberfläche verteilen oder umverteilen. Alle diese Kräfte werden aufsummiert und danach mit Hilfe eines numerischen Integrationsverfahren die Veränderung der Teilchengeschwindigkeit und -position berechnet, die sich in einem gewissen Zeitschritt ergibt. Dieser Art der Physiksimulation der Massengutbewegung resultiert, wie unmittelbar einleuchtet, im Vergleich zu der oben beschrieben Kegelmethode in einer besseren Realitätsnähe. Allerdings verlangt die DEM-Simulation deutlich mehr Rechen- und Speicherplatzresourcen des Steuerrechners.

Bei einer weiteren bevorzugten Ausgestaltung des erfindungsgemäßen Systems wird das Haldenmodell beim Abhalden aktualisiert, indem Schichten einer oder mehrerer Massengutsäulen auf Basis der Physiksimulation ganz oder teilweise entfernt werden. Dabei kann die Physiksimulation einen Abhaldungsvorgang nachbilden, indem entsprechend der Geometrie und der aktuellen Position des Fördergerätes das Massengut an den von den abhaldenden Einrichtungen des Fördergerätes verdrängten Positionen aus dem Haldenmodell entfernt wird. Bei der Simulation eines Abhaldungsvorgangs wird also zunächst die aktuelle Abhaldungsposition ermittelt. Die Abhaldungsposition wird dabei aus dem über die Leittechnikeinrichtung verfügbaren Sensorikdaten und den im Steuerrechner hinterlegten Gerätedaten der Fördereinrichtung (z.B. Länge des Kratzerarms eines Portalkratzers) ermittelt. Aus der Abhaldungsposition und den bekannten Gerätedimensionen der Fördereinrichtung wird dann dasjenige Massengutvolumen aus dem Haldenmodell entfernt, welches durch die fördernden Einrichtungen des Fördergerätes (z.B. Kratzerarm) verdrängt wird. Bei Einsatz eines Schaufelrades ist dies z.B. dasjenige Volumen, das sich an der aktuellen Position des Schaufelrades befindet. Besonders zweckmäßig ist es im Sinne einer guten Realitätsnähe, wenn die Physiksimulation bei dem Abhaldungsvorgang auch ein Nachrutschen des Massengutes berücksichtigt. Hierfür kann die oben beschriebene Kegelmethode auf Basis des für das jeweilige Material geltenden Schüttwinkels verwendet werden. Ebenso kann das Nachrutschen durch die erwähnte DEM-Methode simuliert werden.

Um die Realitätsnähe der erfindungsgemäß eingesetzten Physiksimulation weiter zu verbessern, kann bei der Hinzufügung von Massengut zu dem Haldenmodell und/oder bei der Entfernung des Massengutes aus dem Haldenmodell ein Abgleich mit sensorisch erfassten Mengen des auf- bzw. abgehaldeten Massengutes erfolgen. Zur sensorischen Erfassung der Mengen eigenen sich z.B. Förderbandwaagen, die das auf- bzw. abgehaldete Massengut wiegen. Die entsprechenden Sensorikdaten sind für den Steuerrechner über die damit verbundene Leittechnikeinrichtung abfragbar.

Bei einer weiteren bevorzugten Ausgestaltung weist das erfindungsgemäße System eine Schnittstelle zu einem Logistiksystem auf, über welche Auf- und/oder Abhaldungsvorgängen zugeordnete Daten betreffend Massengutmengen und Massengutparameter zwischen dem Logistiksystem und dem Steuerrechner austauschbar sind. Der Steuerrechner kann dann eingerichtet sein, bei Aufhaldungsvorgängen die über die Schnittstelle vom Logistiksystem erhaltenen Daten betreffend Parameter des aufgehaldeten Massengutes dem Haldenmodell hinzuzufügen. Weiterhin kann der Steuerrechner eingerichtet sein, bei Abhaldungsvorgängen Daten betreffend die Parameter des abgehaldeten Massengutes aus dem Haldenmodell über die Schnittstelle an das Logistiksystem zu übertragen. Somit ermöglicht die Schnittstelle zu dem Logistiksystem einerseits den Empfang von Logistik- und Qualitätsdaten von Massengutlieferungen und die Zuordnung dieser Daten zum Haldeninhalt über das Haldenmodell.

Ausführungsbeispiele der Erfindung werden im Folgenden anhand der Zeichnungen näher erläutert. Es zeigen:
- Figur 1:: schematische Darstellung des erfindungsgemäßen Systems als Blockdiagramm;
- Figur 2:: Illustration der erfindungsgemäßen Physiksimulation bei einem Aufhaldungsvorgang;
- Figur 3:: Illustration des erfindungsgemäß verwendeten Datenmodells;
- Figur 4:: erstes Beispiel für die Simulation eines Abhaldungsvorgangs;
- Figur 5:: zweites Beispiel für die Simulation eines Abhaldungsvorgangs;
- Figur 6:: drittes Beispiel für die Simulation eines Abhaldungsvorgangs.

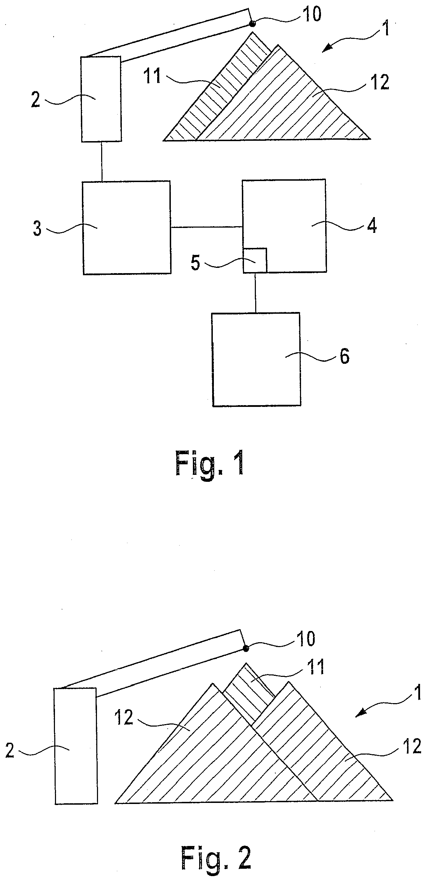

Das in der Figur 1 dargestellte System dient zum Betrieb einer Halde 1. Das System umfasst eine schematisch dargestellte Fördereinrichtung 2, die bei dem dargestellten Ausführungsbeispiel zum Aufhalden von Massengut dient. Die Fördereinrichtung 2 ist mit einer Leittechnikeinrichtung 3 verbunden. Die Leittechnikeinrichtung 3 bewirkt eine automatische Steuerung der Fördereinrichtung 2. Mit der Leittechnikeinrichtung 3 ist wiederum ein Steuerrechner 4 verbunden, der Auf- und/oder Abhaldungsvorgänge gemäß der Erfindung auf Basis eines dreidimensionalen Haldenmodells steuert. Auf dem Steuerrechner 4 ist eine Schnittstelle 5 zu einem Logistiksystem 6 eingerichtet. Über die Schnittstelle 5 können Auf- und/oder Abhaldungsvorgängen zugeordnete Daten betreffend Massengutmengen und Massengutparameter zwischen dem Logistiksystem 6 und dem Steuerrechner 4 ausgetauscht werden. Bei Aufhaldungsvorgängen können die über die Schnittstelle 5 vom Logistiksystem 6 erhaltenen Daten betreffend Parameter des angelieferten und aufzuhaldenden Massengutes dem von dem Steuerrechner 4 verwalteten Haldenmodell hinzugefügt werden. Bei Abhaldungsvorgängen können Daten betreffend die Parameter des abgehaldeten Massengutes aus dem Haldenmodell über die Schnittstelle 5 an das Logistiksystem 6 übertragen werden, um auf diese Weise nachgelagerten Systemen, in denen z.B. das abgehaldete Massengut verarbeitet wird, die entsprechenden Massengutparameter verfügbar zu machen.

Gemäß der Erfindung führt der Steuerrechner 4 eine deterministische, dynamische Physiksimulation durch, welche die Massengutbewegung beim Aufund/oder Abhalden nachbildet und so das Haldenmodell entsprechend der auf- bzw. abgehaldeten Massengutmenge aktualisiert. Wie oben erläutert, bewirkt die realitätsnahe Physiksimulation, dass das erfindungsgemäße System keine Messvorrichtung zur Vermessung der Geometrie der Halde 1 benötigt.

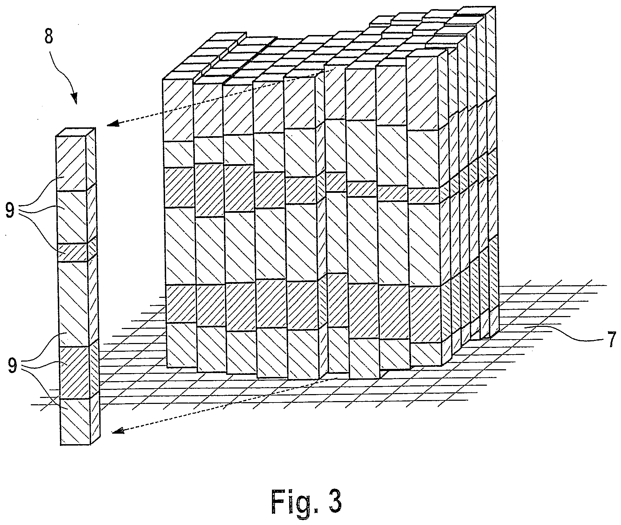

Die Figur 3 illustriert das dem gemäß der Erfindung verwendeten Haldenmodell zugrundeliegende Datenmodell. Dieses unterteilt den Lagerplatz der Halde 1 in ein horizontales zweidimensionales Raster 7 mit vorgebbarer Auflösung. Die Auflösung ist, wie oben erläutert, so zu wählen, dass das Modell in Kombination mit der verwendeten Physiksimulation eine hinreichende Realitätsnähe liefert. Wie in Figur 3 weiter zu erkennen ist, ist jedem Feld des Rasters 7 eine vertikale Massengutsäule 8 zugeordnet, wobei jede Massengutsäule in vertikaler Richtung in Schichten 9 variabler Dicke unterteilt ist. Massenguthalden enthalten in der Regel Massengüter unterschiedlicher Qualitäten. Das in der Figur 3 illustrierte Datenmodell gewährleistet, dass die aktuelle Zusammensetzung der Halde und die Verteilung der Massengutqualitäten jederzeit verfügbar sind. Dies ermöglicht einen effizienten Betrieb der Massenguthalde. Entsprechend sind durch das Datenmodell jeder Schicht 9 innerhalb jeder Massengutsäule 8 ein oder mehrere das Massengut charakterisierende Massengutparameter zugeordnet. Die Massengutparameter können die Materialqualität betreffen sowie auch logistische Informationen, um das an einer bestimmten Stelle in der Halde befindliche Massengut z.B. einer bestimmten Lieferung zuordnen zu können.

Auf der Basis des in der Figur 3 dargestellten dreidimensionalen Haldenmodells wird gemäß der Erfindung die Physiksimulation zur Nachbildung der Massengutbewegung beim Auf- und/oder Abhalden durchgeführt. Beim Aufhalden wird das Haldenmodell aktualisiert, indem einer oder mehreren Massengutsäulen 9 auf Basis der Physiksimulation eine oder mehrere Schichten 9 entsprechender Dicke hinzugefügt werden. Dies ist in den Figuren 1 und 2 illustriert. Die Physiksimulation bildet den Aufhaldungsvorgang nach, indem von einem Abwurfpunkt 10 der Fördereinrichtung 2 ausgehend ein aufgehaldetes Massengutvolumen 11 kegelförmig auf der Oberfläche der gemäß dem Haldenmodell bereits bestehenden Halde 12 verteilt wird und den Massengutsäulen 8 eine oder mehrere Schichten 9 entsprechend der Kegelgeometrie hinzugefügt werden. Die Kegelgeometrie bestimmt sich nach einem Schüttwinkel, der von der Art und Beschaffenheit des aufgehaldeten Massengutes abhängt. Dieser Parameter kann über die Schnittstelle 5 von dem Logistiksystem 6 verfügbar gemacht werden. Sind entsprechende Informationen nicht verfügbar, kann auf einen hinterlegten Standardwert für den Schüttwinkel zurückgegriffen werden. Bei dem in Figur 1 dargestellten Ausführungsbeispiel umfließt die aufgehaldete Massengutlieferung 11 die Bestandshalde 12 kegelförmig. Bei dem in Figur 2 dargestellten Ausführungsbeispiel füllt das aufgehaldete Massengut 11 der neuen Schüttgutlieferung die Bestandshalde 12 kegelförmig auf.

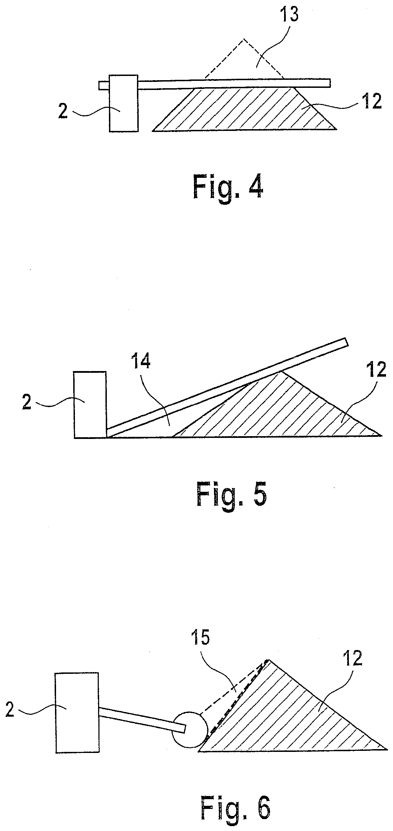

Beim Abhalden wird gemäß der Erfindung das Haldenmodell aktualisiert, indem Schichten 9 einer oder mehrerer Massengutsäulen 8 auf Basis der Physiksimulation ganz oder teilweise entfernt werden. Dies wird für unterschiedliche Arten von Abhaldungsvorgängen im Folgenden anhand der Figuren 4 bis 6 erläutert.

Die Physiksimulation bildet gemäß der Erfindung einen Abhaldungsvorgang nach, indem entsprechend der Geometrie und der aktuellen Position des Fördergerätes 2 das Massengut an den von den abhaldenden Einrichtungen des Fördergerätes 2 verdrängten Positionen aus dem Haldenmodell entfernt wird. Bei dem in Figur 4 dargestellten Ausführungsbeispiel entfernt die Fördereinrichtung 2 das Teilvolumen 13 aus der Halde 12.

Die zum Abhalden in Figur 5 verwendete Fördereinrichtung 2 ist ein Portalkratzer, dessen Kratzarm unter einem Winkel an der Halde 12 anliegt, der kleiner ist als der Schüttwinkel. Beim Abhaldungsvorgang wird durch die Physiksimulation zunächst eine Rampe 14 zur Aufnahme des Portalkratzers hin gebildet, bevor das von dem Kratzarm verdrängte Massengut ganz aus dem Haldenmodell entfernt wird.

Bei dem in Figur 6 gezeigten Ausführungsbeispiel ist die Fördereinrichtung 2 ein Schaufelradbagger. Es wird hier dasjenige Massengut aus dem Modell der Halde 12 entfernt, das von dem Schaufelrad des Baggers verdrängt wird. Im Bereich 15 wird ein Nachrutschen des Massengutes nach Maßgabe des entsprechenden Schüttwinkels oder auf Basis einer DEM-Methode simuliert.

## Patentansprüche

1. System zum Betrieb einer Halde (1), mit einer Fördereinrichtung (2) zum Auf- und/oder Abhalden von Massengut, einer mit der Fördereinrichtung (2) verbundenen Leittechnikeinrichtung (3) zur automatischen Steuerung der Fördereinrichtung (2), und einem mit der Leittechnikeinrichtung (3) verbundenen Steuerrechner (4), der Auf- und/oder Abhaldungsvorgänge auf Basis eines dreidimensionalen Haldenmodells steuert, **dadurch gekennzeichnet dass** der Steuerrechner (4) zur Durchführung einer deterministischen, dynamischen Physiksimulation eingerichtet ist, welche die Massengutbewegung beim Aufund/oder Abhalden nachbildet und so das Haldenmodell entsprechend der auf- bzw. abgehaldeten Massengutmenge aktualisiert, wobei das System keine Messvorrichtung zur Vermessung der Haldengeometrie aufweist.

2. System nach Anspruch 1, **dadurch gekennzeichnet, dass** das Haldenmodell auf einem Datenmodell basiert, welches den Lagerplatz der Halde (1) in ein horizontales zweidimensionales Raster (7) mit vorgebbarer Auflösung unterteilt, wobei jedem Feld des Rasters (7) eine vertikale Massengutsäule (8) zugeordnet ist, wobei jede Massengutsäule (8) in vertikaler Richtung in Schichten unterteilt ist.

3. System nach Anspruch 2, **dadurch gekennzeichnet, dass** durch das Datenmodell jeder Schicht (9) innerhalb jeder Massengutsäule (8) ein oder mehrere das Massengut charakterisierende Massengutparameter zugeordnet werden.

4. System nach Anspruch 3, **dadurch gekennzeichnet, dass** der Steuerrechner (4) Abhaldungsvorgänge automatisch auf Basis einer benutzerseitigen Vorgabe von Massengutparametern steuert.

5. System nach einem der Ansprüche 2 bis 4, **dadurch gekennzeichnet, dass** beim Aufhalden das Haldenmodell aktualisiert wird, indem einer oder mehreren Massengutsäulen (8) auf Basis der Physiksimulation eine oder mehrere Schichten (9) hinzugefügt werden.

6. System nach Anspruch 5, **dadurch gekennzeichnet, dass** die Physiksimulation einen Aufhaldungsvorgang nachbildet, indem von einem Abwurfpunkt (10) ausgehend ein aufgehaldetes Massengutvolumen (11) kegelförmig auf der gemäß dem Haldenmodell bestehenden Haldenoberfläche verteilt wird und den Massengutsäulen (8) eine oder mehrere Schichten (9) entsprechend der Kegelgeometrie hinzugefügt werden.

7. System nach einem der Ansprüche 2 bis 6, **dadurch gekennzeichnet, dass** beim Abhalden das Haldenmodell aktualisiert wird, indem Schichten (9) einer oder mehrerer Massengutsäulen (8) auf Basis der Physiksimulation ganz oder teilweise entfernt werden.

8. System nach Anspruch 7, **dadurch gekennzeichnet, dass** die Physiksimulation einen Abhaldungsvorgang nachbildet, indem entsprechend der Geometrie und der aktuellen Position des Fördergerätes (2) das Massengut an den von den abhaldenden Einrichtungen des Fördergerätes (2) verdrängten Positionen aus dem Haldenmodell entfernt wird.

9. System nach Anspruch 7 oder 8, **dadurch gekennzeichnet, dass** die Physiksimulation bei dem Abhaldungsvorgang ein Nachrutschen des Massengutes nachbildet.

10. System nach einem der Ansprüche 1 bis 8, **dadurch gekennzeichnet, dass** bei der Hinzufügung von Massengut zu dem Haldenmodell und/oder bei der Entfernung des Massengutes aus dem Haldenmodell ein Abgleich mit sensorisch erfassten Mengen des auf- bzw. abgehaldeten Massengutes erfolgt.

11. System nach einem der Ansprüche 1 bis 10, **dadurch gekennzeichnet, dass** die Aktualisierung des Haldenmodells mit der Taktung der Leittechnikeinrichtung (3) erfolgt.

12. System nach einem der Ansprüche 1 bis 11, **gekennzeichnet durch** eine Schnittstelle (5) zu einem Logistiksystem (6), über welche Auf- und/oder Abhaldungsvorgängen zugeordnete Daten betreffend Massengutmengen und Massengutparameter zwischen dem Logistiksystem (6) und dem Steuerrechner (4) austauschbar sind.

13. System nach Anspruch 12, **dadurch gekennzeichnet, dass** der Steuerrechner (4) eingerichtet ist, bei Aufhaldungsvorgängen die über die Schnittstelle (5) vom Logistiksystem (6) erhaltenen Daten betreffend Parameter des aufgehaldeten Massengutes dem Haldenmodell hinzuzufügen.

14. System nach Anspruch 12 oder 13, **dadurch gekennzeichnet, dass** der Steuerrechner (4) eingerichtet ist, bei Abhaldungsvorgängen Daten betreffend die Parameter des abgehaldeten Massengutes aus dem Haldenmodell über die Schnittstelle (5) an das Logistiksystem (6) zu übertragen.

15. System nach einem der Ansprüche 1 bis 14, **dadurch gekennzeichnet, dass** die Physiksimulation auf einer Diskrete Elemente Methode (DEM) basiert.

16. Verfahren zum Betrieb einer Halde (1), wobei mittels einer Fördereinrichtung (2) Massengut auf- und/oder abgehaldet wird, wobei die Fördereinrichtung (2) über eine mit dieser verbundene Leittechnikeinrichtung (3) automatisch gesteuert wird, und wobei mittels eines mit der Leittechnikeinrichtung (3) verbundenen Steuerrechners (4) Auf- und/oder Abhaldungsvorgänge auf Basis eines dreidimensionalen Haldenmodells gesteuert werden, wobei mittels des Steuerrechners (4) eine deterministische, dynamische Physiksimulation durchgeführt wird, welche die Massengutbewegung beim Auf- und/oder Abhalden nachbildet, und so das Haldenmodell entsprechend der auf- bzw. abgehaldeten Massengutmenge aktualisiert wird,
**dadurch gekennzeichnet, dass** während oder nach den Auf- und/oder Abhaldungsvorgängen keine Vermessung der Haldengeometrie erfolgt.

## Claims

1. System for operating a stockpile (1), having a conveying device (2) for piling and/or unpiling bulk material, a control technology device (3) which is connected to the conveying device (2) and is intended to automatically control the conveying device (2), and a control computer (4) which is connected to the control technology device (3) and controls piling and/or unpiling operations on the basis of a three-dimensional stockpile model,
**characterized in that**
the control computer (4) is set up to carry out a deterministic dynamic physical simulation which simulates the movement of bulk material during piling and/or unpiling and therefore updates the stockpile model according to the amount of bulk material which has been piled and/or unpiled,
the system not having a measuring apparatus for measuring the stockpile geometry.

2. System according to Claim 1, **characterized in that** the stockpile model is based on a data model which subdivides the storage location of the stockpile (1) into a horizontal two-dimensional grid (7) with a predefinable resolution, a vertical bulk material column (8) being assigned to each field of the grid (7), and each bulk material column (8) being subdivided into layers in the vertical direction.

3. System according to Claim 2, **characterized in that** one or more bulk material parameters which characterize the bulk material are assigned to each layer (9) inside each bulk material column (8) by means of the data model.

4. System according to Claim 3, **characterized in that** the control computer (4) automatically controls unpiling operations on the basis of a user specification of bulk material parameters.

5. System according to one of Claims 2 to 4, **characterized in that** the stockpile model is updated during piling by adding one or more layers (9) to one or more bulk material columns (8) on the basis of the physical simulation.

6. System according to Claim 5, **characterized in that** the physical simulation simulates a piling operation by distributing a piled volume of bulk material (11) in a conical manner on the stockpile surface existing according to the stockpile model starting from a drop point (10) and adding one or more layers (9) to the bulk material columns (8) according to the cone geometry.

7. System according to one of Claims 2 to 6, **characterized in that** the stockpile model is updated during unpiling by entirely or partially removing layers (9) from one or more bulk material columns (8) on the basis of the physical simulation.

8. System according to Claim 7, **characterized in that** the physical simulation simulates an unpiling operation by removing the bulk material from the stockpile model at the positions displaced by the unpiling devices of the conveying device (2) according to the geometry and the current position of the conveying device (2).

9. System according to Claim 7 or 8, **characterized in that** the physical simulation simulates sliding down of the bulk material during the unpiling operation.

10. System according to one of Claims 1 to 8, **characterized in that** an adjustment is carried out using amounts of the piled and/or unpiled bulk material sensed by means of sensors when adding bulk material to the stockpile model and/or when removing the bulk material from the stockpile model.

11. System according to one of Claims 1 to 10, **characterized in that** the stockpile model is updated with the clocking of the control technology device (3).

12. System according to one of Claims 1 to 11, **characterized by** an interface (5) to a logistics system (6), which interface can be used to interchange data, which are assigned to piling and/or unpiling operations and relate to bulk material amounts and bulk material parameters, between the logistics system (6) and the control computer (4).

13. System according to Claim 12, **characterized in that** the control computer (4) is set up to add the data, which are received from the logistics system (6) via the interface (5) and relate to parameters of the piled bulk material, to the stockpile model during piling operations.

14. System according to Claim 12 or 13, **characterized in that** the control computer (4) is set up to transmit data relating to the parameters of the unpiled bulk material from the stockpile model to the logistics system (6) via the interface (5) during unpiling operations.

15. System according to one of Claims 1 to 14, **characterized in that** the physical simulation is based on a discrete element method (DEM).

16. Method for operating a stockpile (1), wherein bulk material is piled and/or unpiled by means of a conveying device (2), wherein the conveying device (2) is automatically controlled via a control technology device (3) connected to it, and wherein piling and/or unpiling operations are controlled by means of a control computer (4) connected to the control technology device (3) on the basis of a three-dimensional stockpile model, wherein the control computer (4) is used to carry out a deterministic dynamic physical simulation which simulates the movement of bulk material during piling and/or unpiling and the stockpile model is therefore updated according to the piled and/or unpiled amount of bulk material, **characterized in that**
the stockpile geometry is not measured during or after the piling and/or unpiling operations.

## Revendications

1. Système d'exploitation d'un terril (1), comprenant un appareil de convoyage (2) destiné à mettre en terril et/ou à déstocker de la matière en vrac, un appareil d'automatisme (3) relié à l'appareil de convoyage (2) et destiné à la commande automatique de l'appareil de convoyage (2) et un ordinateur de commande (4) relié à l'appareil d'automatisme (3), lequel commande des opérations de mise en terril et/ou de déstockage en se basant sur un modèle de terril tridimensionnel,
**caractérisé en ce que**
l'ordinateur de commande (4) est conçu pour exécuter une simulation physique dynamique déterministe, laquelle simule le mouvement de la matière en vrac lors de la mise en terril et/ou du déstockage et actualise ainsi le modèle de terril conformément à la quantité de matière en vrac mise en terril et/ou déstockée,
le système ne possédant aucun dispositif de mesure destiné à la mesure de la forme géométrique du terril.

2. Système selon la revendication 1, **caractérisé en ce que** le modèle de terril se base sur un modèle de données qui divise l'emplacement de stockage du terril (1) en une grille bidimensionnelle (7) horizontale avec une résolution pouvant être prédéfinie, une colonne de matière en vrac (8) verticale étant associée à chaque champ de la grille (7), chaque colonne de matière en vrac (8) étant divisée en couches dans le sens vertical.

3. Système selon la revendication 2, **caractérisé en ce qu'**un ou plusieurs paramètres de matière en vrac caractérisant la matière en vrac sont associés par le modèle de données à chaque couche (9) à l'intérieur de chaque colonne de matière en vrac (8).

4. Système selon la revendication 3, **caractérisé en ce que** l'ordinateur de commande (4) commande automatiquement des opérations de déstockage en se basant sur une indication par l'utilisateur de paramètres de la matière en vrac.

5. Système selon l'une des revendications 2 à 4, **caractérisé en ce que** le modèle de terril est actualisé lors de la mise en terril **en ce qu'**une ou plusieurs couches (9) sont ajoutées à une ou plusieurs colonnes de matière en vrac (8) sur la base de la simulation physique.

6. Système selon la revendication 5, **caractérisé en ce que** la simulation physique simule une opération de mise en terril **en ce qu'**un volume de matière en vrac (11) mis en terril est distribué en forme de cône à partir d'un point de largage (10) sur la surface du terril existante selon le modèle de terril et une ou plusieurs couches (9) sont ajoutées aux colonnes de matière en vrac (8) conformément à la forme géométrique du cône.

7. Système selon l'une des revendications 2 à 6, **caractérisé en ce que** le modèle de terril est actualisé lors du déstockage **en ce que** des couches (9) sont retirées entièrement ou partiellement d'une ou de plusieurs colonnes de matière en vrac (8) sur la base de la simulation physique.

8. Système selon la revendication 7, **caractérisé en ce que** la simulation physique simule une opération de déstockage **en ce que** la matière en vrac est retirée du modèle de terril aux positions déplacées par les appareils déstockeurs de l'appareil de convoyage (2) conformément à la forme géométrique et à la position actuelle de l'appareil de convoyage (2).

9. Système selon la revendication 7 ou 8, **caractérisé en ce que** la simulation physique simule un éboulement de la matière en vrac lors de l'opération de déstockage.

10. Système selon l'une des revendications 1 à 8, **caractérisé en ce que** lors de l'ajout de matière en vrac au modèle de terril et/ou lors de l'enlèvement de matière en vrac du modèle de terril, un alignement avec des quantités détectées par des capteurs de matière en vrac mise en terril ou déstockée est effectué.

11. Système selon l'une des revendications 1 à 10, **caractérisé en ce que** l'actualisation du modèle de terril est effectuée avec l'horloge de l'appareil d'automatisme (3).

12. Système selon l'une des revendications 1 à 11, **caractérisé par** une interface (5) vers un système logistique (6), par le biais de laquelle des données associées aux opérations de mise en terril et/ou de déstockage concernant des quantités de matière en vrac et des paramètres de la matière en vrac peuvent être échangées entre le système logistique (6) et l'ordinateur de commande (4).

13. Système selon la revendication 12, **caractérisé en ce que** l'ordinateur de commande (4) est conçu pour, lors des opérations de mise en terril, ajouter au modèle de terril les données concernant les paramètres de la matière en vrac mise en terril, obtenues de la part du système logistique (6) par le biais de l'interface (5).

14. Système selon la revendication 12 ou 13, **caractérisé en ce que** l'ordinateur de commande (4) est conçu pour, lors des opérations de déstockage, transmettre depuis le modèle de terril des données concernant les paramètres de la matière en vrac déstockée au système logistique (6) par le biais de l'interface (5).

15. Système selon l'une des revendications 1 à 14, **caractérisé en ce que** la simulation physique se base sur une méthode des éléments discrets (DEM).

16. Procédé d'exploitation d'un terril (1), de la matière en vrac étant mise en terril et/ou déstockée au moyen d'un appareil de convoyage (2), l'appareil de convoyage (2) étant commandé automatiquement par un appareil d'automatisme (3) relié à celui-ci, et les opérations de mise en terril et/ou de déstockage étant commandées en se basant sur un modèle de terril tridimensionnel au moyen d'un ordinateur de commande (4) relié à l'appareil d'automatisme (3), une simulation physique dynamique déterministe, laquelle simule le mouvement de la matière en vrac lors de la mise en terril et/ou du déstockage, étant exécutée par l'ordinateur de commande (4) et le modèle de terril étant ainsi actualisé conformément à la quantité de matière en vrac mise en terril ou déstockée, **caractérisé en ce qu'**aucune mesure de la forme géométrique du terril n'est effectuée pendant ou après les opérations de mise en terril et/ou de déstockage.
